## Europäisches Patentamt
### European Patent Office
### Office européen des brevets

Veröffentlichungsnummer: **0 273 186**
**A2**

# EUROPÄISCHE PATENTANMELDUNG

Anmeldenummer: **87117141.9**

Int. Cl.⁴ **G01B 11/00**

Anmeldetag: **20.11.87**

Priorität: **20.12.86 DE 3639587**
**12.02.87 DE 3704313**

Veröffentlichungstag der Anmeldung:
**06.07.88 Patentblatt 88/27**

Benannte Vertragsstaaten:
**BE DE FR GB IT LU NL**

Anmelder: **Fried. Krupp Gesellschaft mit beschränkter Haftung**
**Altendorfer Strasse 103**
**D-4300 Essen 1(DE)**

Erfinder: **Adolfs, Friedhelm, Dipl.-Phys.**
**Angermunder Weg 52**
**D-4030 Ratingen 1(DE)**
Erfinder: **Bittner, Gerd, Dipl.-Ing.**
**Am Schoolkamp 36**
**D-4250 Bottrop(DE)**
Erfinder: **Büsing, Klaus-Peter, Dipl.-Ing.**
**Böckenheckstrasse 21**
**D-4354 Datteln(DE)**
Erfinder: **Harris, Stephan, Dr.**
**Hamannstrasse 16**
**D-4030 Ratingen 8(DE)**
Erfinder: **Hahn, Ulrich, Dr.**
**Mülheimer Strasse 42**
**D-4300 Essen 1(DE)**
Erfinder: **Würzburger, Martin, Dipl.-Phys.-Ing.**
**Norderneyweg 5**
**D-4300 Essen 1(DE)**

### Berührungsloses optisches Verfahren zur Bestimmung von Gegenständen.

Es wird ein berührungsloses optisches Verfahren angegeben, mit dem die Bestimmungsgrößen, z.B. Art, Lage, Längenänderung, Schwindungsspektrum, eines Gegenstandes festgestellt und/oder gemessen werden können. Bei diesem Verfahren wird kohärentes Licht durch ein optisches Medium, das fest mit dem Gegenstand verbunden ist, verändert. Für die jeweiligen Bestimmungsgrößen werden geeignete optische Medien, z.B. akusto-optische Wandler oder spezielle Hologramme, ausgewählt. Aus den durch diese optischen Medien bewirkten Veränderungen kohärenten Lichts ermittelt ein lichtempfindlicher Empfänger mit Auswertung die jeweiligen Bestimmungsgrößen des Gegenstandes.

EP 0 273 186 A2

## Berührungsloses optisches Verfahren zur Bestimmung von Gegenständen

Die Erfindung bezieht sich auf ein optisches Verfahren, mit dem Art, Lage, Deformation und Vibration von Gegenständen bestimmt werden können.

Für die Bestimmung der Art (Identifizierung), der Lage (Positionserkennung), der Deformation und der Vibrationen sind bisher verschiedene Techniken notwendig.

Die optische Kennzeichnung von Gegenständen z.B. mit bar-codes ist wegen der Größe, der geringen Informationsdichte (10 Zeichen cm), der Empfindlichkeit gegenüber Verschmutzungen, Verletzungen und Vibrationen nur beschränkt einsetzbar.

Die optische Positionserkennung mit Bildverarbeitungssystemen ist sehr aufwendig, verlangt komplizierte und individuelle Software für jeden Gegenstand und ist, bedingt durch den Ablauf der Bildanalyse, für manche Automatenanwendungen zu langsam. Dieses Verfahren ist außerdem nur für einfache geometrische Gebilde anwendbar und ist empfindlich gegenüber Oberflächenreflexen.

Die berührungslose optische Bestimmung von Deformationen z.B. nach dem Moiré-Verfahren oder aber mit der holographischen Interferometrie sind aufwendig und wenig anpassungsfähig bezüglich der Empfindlichkeit, empfindlich gegenüber Vibrationen und empfindlich gegenüber Verletzungen und Abdeckungen des Sonsors.

Die berührungslose Bestimmung der Vibrationen von Gegenständen ist nach den herkömmlichen Methoden sehr aufwendig und für manche Automatenanwendungen zu langsam.

Der Erfindung liegt daher die Aufgabe zugrunde, die Bestimmung von Gegenständen mit einem Verfahren schneller und/oder störungsfreier und/oder unempfindlich gegenüber Oberflächenreflexen und/oder weitgehend unabhängig von der Art des Gegenstandes durchzuführen als die bisherigen Verfahren es ermöglichen.

Erfindungsgemäß wird die Aufgabe dadurch gelöst, daß die Holographie und die Interferenz kohärenten Lichts zur Bestimmung von Gegenständen d.h. z.B. ihrer Identifizierung, ihrer Positionserkennung, der Bestimmung ihrer Deformation oder der davon abhängigen Größen wie z.B. Druck, Temperatur und der Bestimmung ihrer Vibrationen angewendet wird.

Für die statischen Bestimmungsgrößen des Gegenstandes (Art, Position, Temperatur etc.) besteht die Meßanordnung aus einer Lichtquelle, einem passiven otpischen Medium, vorzugsweise einem Reflexions-Hologramm, das auf dem Gegenstand angebracht ist und einem lichtempfindlichen Empfänger mit Auswertung z.B. einer kommerziellen TV-Kamera mit Monitor. Die Lichtquelle bestrahlt das Hologramm auf dem Gegenstand mit kohärentem Licht. Das reflektierte und oder gebeugte Licht wird als Signal vom lichtempfindlichen Empfänger empfangen und mit konventionellen Methoden z.B. einem Monitor ausgewertet.

Für die Schwingungen, besteht die Meßanordnung aus einer Quelle kohärenten Lichts, einem akusto-optischen Wandler, der mit dem Gegenstand fest verbunden ist, einem Transmissions-Hologramm und einem Empfänger z.B. einer Phot o-Diode, die mit einer Auswerteeinheit verbunden ist. Das kohärente Licht der Quelle wird durch den akusto-optischen Wandler und durch das Hologramm auf den Empfänger geschickt. Das Hologramm hat das charakteristische Muster für ein bestimmtes Vibrationsspektrum, so daß Abweichungen von diesem Verhalten einfach und schnell durch die empfangene Lichtintensität bestimmt werden können.

Das erfindungsgemäße Meßverfahren ist unempfindlich gegenüber elektromagnetischen Störeinflüssen, hat eine große Anwendungsbreite und ist sehr schnell. Die Hologramme sind weitgehend unempfindlich gegen Kratzer und Abdeckungen und sie können durch geeignete Lacküberzüge z.B. Schellack auch weitgehend gegen Ölverschmutzungen unempfindlich gemacht werden.

Die Hologramme sind vorzugsweise als Fourier-Hologramme auszuführen. Fourier-Hologramme sind invariant gegenüber Translationen und damit weitgehend unempfindlich gegenüber Vibrationen. Da das rekonstruierte Bild eines Fourier-Hologramms im Unendlichen abgebildet wird, kann das Bild mit einer Linse unabhängig vom Abstand zum Hologramm bei fester Brennweite und fester Bildweite immer scharf abgebildet werden.

Für die Identifizierung können mindestens 128 Zeichen,cm$^2$ auf einem Hologramm untergebracht werden. Die Bestimmung der Längenänderung kann mit sehr verschiedener Empfindlichkeit, je nach Wahl des Hologramms, durchgeführt werden. Relative Längenänderungen bis zu 10$^7$ sind durch geeignete Wahl des Hologramms und des Empfängers bei den oben angegebenen Vorteilen der Meßmethode meßbar.

Die Positionsbestimmung kann mit Hilfe von Positionsmarken und/oder Führungsstrahlen, die durch Hologramme rekonstruiert werden, durchgeführt werden. Diese Hologramme können auch synthetisch hergestellt sein.

Die Positionsmarken können

1. Multiplexhologramme sein, die abhängig von der Einfallsrichtung des Lichts verschiedene Bilder zeigen. Die Bilder geben z.B. darüber Auskunft, in welche Richtung der Gegenstand bewegt oder gedreht werden muß, um die gewünschte Position zu erreichen.

2. Hologramme sein, die individuelle Kennzeichen enthalten, die z.B. Angaben über die Winkelkoordinaten eines fest mit dem Gegenstand verbundenen Koordinatensystems machen.

Werden die Hologramme mit einer rotationsvarianten Winkelcodierung versehen, so können auch Angaben über die Rotation um die Blickrichtung gemacht werden, da das rekonstruierte Bild um den Strahl 0. Ordnung rotiert, wenn das Hologramm um eine Achse parallel zum Strahl 0. Ordnung gedreht wird.

Durch ein spezielles Hologramm kann ein Strahlenbündel zu einer Fokuslinie, einem Führungsstrahl gebündelt werden. Mit Hilfe eines solchen Führungsstrahls kann z.B. die Bewegung des Empfängers zum Gegenstand gesteuert werden.

Da bei einer bekannten Hologrammkonstruktion auch der Beugungswinkel 1. Ordnung bekannt ist, kann aus dem Abstand der Schwerpunkte der Lichtintensitätsverteilung der Strahlen 0. und 1. Ordnung der Abstand des Empfängers vom Gegenstand errechnet werden.

Bei allen Meßanordnungen können entsprechend den Anforderungen auch mehrere Hologramme an verschiedenen Stellen und in verschiedenen Größen am Gegenstand angebracht sein. Es können auch in einem Hologramm die Bilder für die verschiedenen Meßanforderungen untergebracht sein.

Die Hologramme können entweder auf einem Träger angebracht sein, der mit dem Gegenstand fest verbunden ist, oder aber direkt auf dem Gegenstand durch Wahl geeigneter Techniken eingeprägt sein.

In den schematischen Zeichnungen Fig. 1 bis Fig. 4 sind Ausführungsbeispiele des Erfindungsgegenstandes dargestellt. Es zeigen

Fig. 1 Ausführungsbeispiel des erfindungsgemäßen Verfahrens zur Messung von Vibrationen.

Fig. 2 Ausführungsbeispiel des erfindungsgemäßen Verfahrens mit fester Lichtquelle zur Feststellung und/oder Messung der statischen Bestimmungsgrößen

Fig. 3 Ausführungsbeispiel des erfindungsgemäßen Verfahrens, bei dem Lichtquelle und Empfänger miteinander verbunden sind, zur Feststellung und/oder Messung der statischen Bestimmungsgrößen.

Fig. 4 Ausführungsbeispiel des erfindungsgemäßen Verfahrens zur Bestimmung der Lage eines Gegenstandes bezogen auf ein festes vom Gegenstand unabhängiges Koordinatensystem.

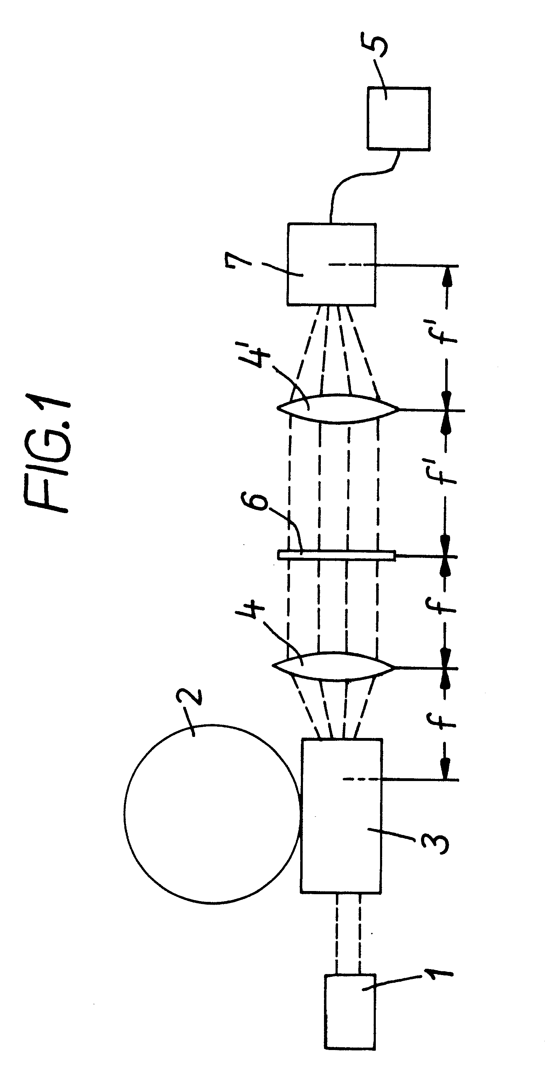

In Fig. 1 wird ein Ausführungsbeispiel gezeigt, mit dem die Vibration eines Motors überwacht werden können. Das kohärente Licht einer Laser-Diode 1 wird durch einen akusto-optischen Wandler 3 geschickt, der mit einem Motorgehäuse 2 fest verbunden ist, und durchstrahlt dann ein Transmissionshologramm 6. Eine Photo-Diode 7 hinter dem Hologramm 6 ist mit der Auswerteeinheit 5 verbunden. Die Linsen 4 und 4' sind jeweils so angeordnet, daß die Abstände zum akusto-optischen Wandler und zum Hologramm bzw. zum Hologramm und zur Photo-Diode bestimmt sind durch die Brennweiten f und f'.

Das Hologramm 6 ist zuvor an seinem Platz und bei laufendem Motor mit konventionellen Methoden hergestellt worden. Dabei ist die Arbeitsweise des Motors so gewählt worden, daß er das zu überwachende Vibrationsspektrum erzeugt.

Bei Verwendung dieses Hologramms mißt die Photo-Diode die höchste Lichtintensität, wenn das ausgewählte Vibrationsspektrum vorliegt. Je mehr das Vibrationsspektrum vom ausgewählten Spektrum abweicht, um so schwächer wird die Lichtintensität.

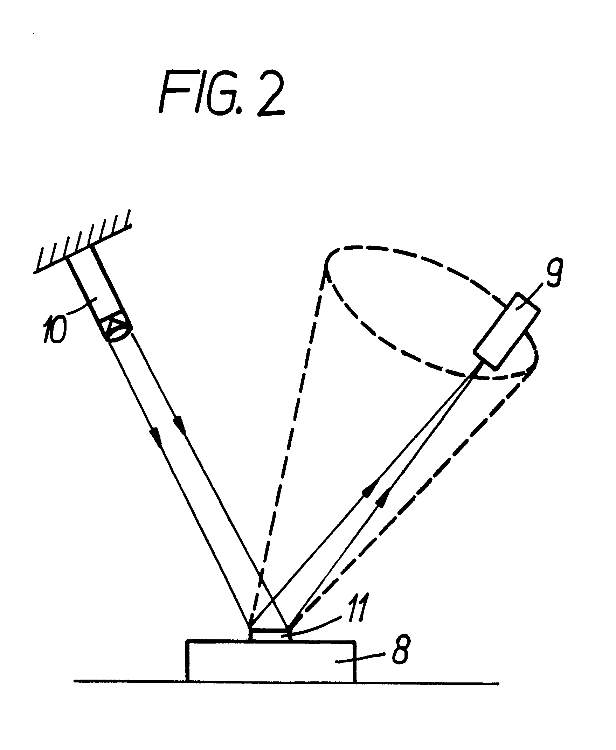

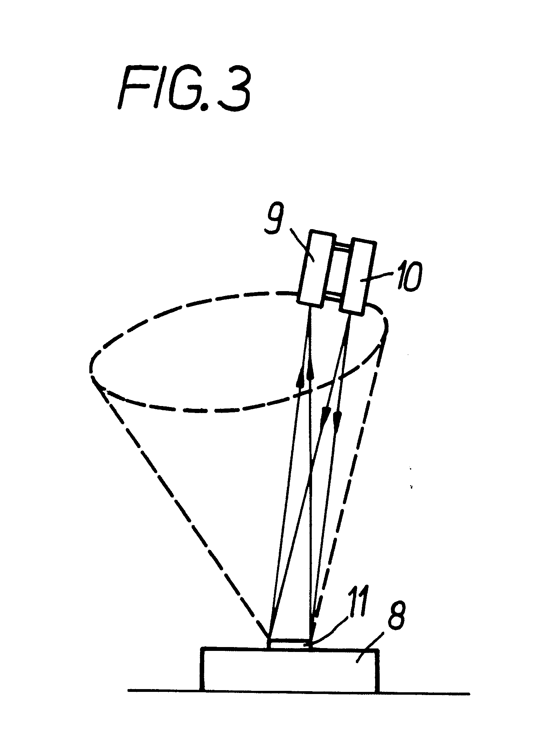

In den Zeichnungen Fig. 2, 3 bestrahlt eine kohärente Lichtquelle 10 ein Hologramm 9, das auf dem Gegenstand 8 angebracht ist. Das reflektierte und/oder gebeugte Licht wird vom lichtempfindlichen Empfänger 11 empfangen. Entweder ist die Lichtquelle und der lichtempfindliche Empfänger beweglich (Fig. 2), oder Empfänger und Lichtquelle sind untereinander verbunden (Fig. 3).

Dabei ist das Multiplexhologramm für Positionierungsaufgaben als Positionsmarke so ausgebildet, daß aus verschiedenen Richtungen verschiedene Bilder gesehen werden, z.B. liefert das Hologramm, wenn es aus jeweils um 90° gedrehten Richtungen betrachtet wird, das Bild eines Dreiecks, das ebenfalls jeweils um 90° gedreht ist. Jedes Dreieck hat vor einer Ecke einen Punkt zur Orientierung. Der Punkt zeigt jeweils an, in welcher Richtung der Zielort für den Empfänger liegt. Ist der lichtempfindliche Empfänger genau über dem Hologramm, so zeigt das Hologramm vier um 90° gegeneinander gedrehte Dreiecke mit einem gemeinsamen Punkt in ihrer Mitte. Das Hologramm kann als Positionsmarke auch so ausgebildet sein, daß die Anzahl der Bilder größer oder kleiner ist.

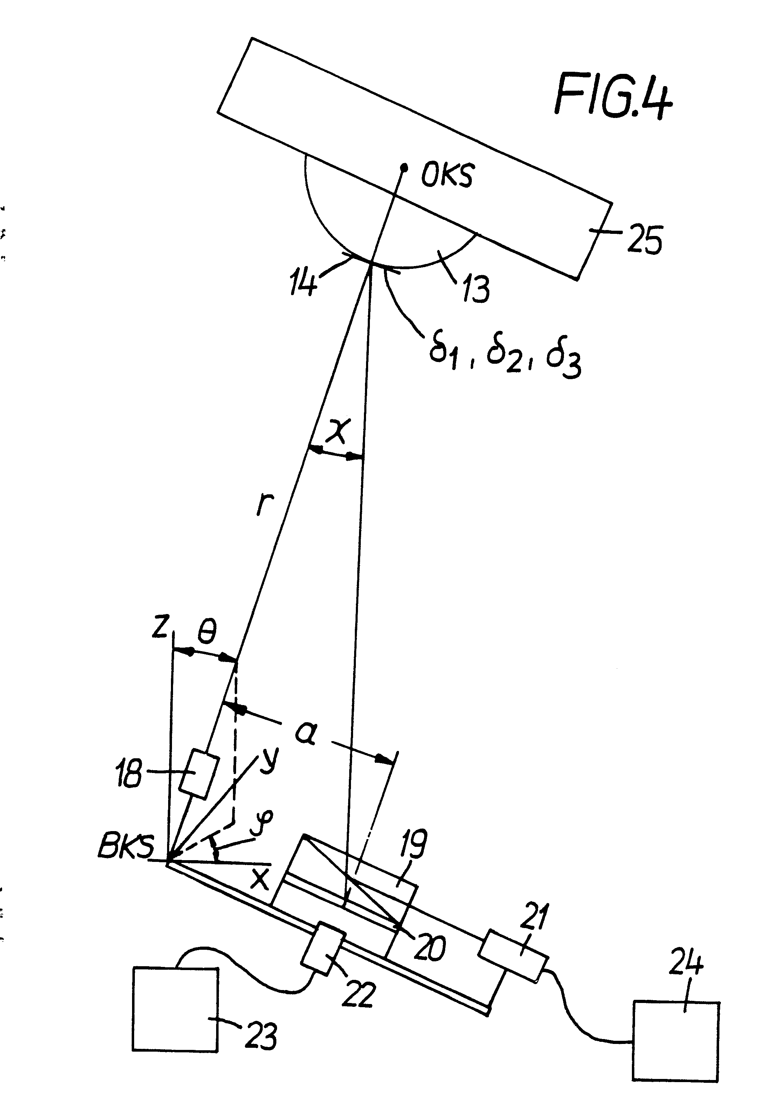

Das Verfahren nach Fig. 4 ist vorzugsweise geeignet, um die Lage des Gegenstandes 25, bezogen auf ein festes Koordinatensystem (BKS) am Meßpunkt zu bestimmen. Die Meßanordnung besteht aus einer am Meßpunkt angeordneten Laser-Scanner-Einrichtung 18, die fest verbunden ist mit einem Strahlteiler 19 mit einer Mattscheibe 20 und den TV-Kameras 21 und 22, die jeweils mit einer Auswerteeinheit 23 und 24 verbunden sind, und dem Meßobjekt 25. Das Meßobjekt ist in diesem Ausführungsbeispiel ein geometrischer Körper, der mit einer Halbkugel versehen ist, dessen Oberfläche mit wabenförmigen flachen ebenen Hologrammen wabenförmig bedeckt ist. Statt dessen können auch Multiplexhologramme verwendet werden. Im allgemeinen kann es ein beliebiger Körper sein, auf dem Hologramme angebracht sind.

Bezogen auf ein festes Koordinatensystem (BKS) am Meßpunkt kann die Lage des Gegenstandes 25 durch die Koordinaten x, y, z, $\alpha$, $\beta$, $\gamma$ beschrieben werden.

Die Ausrichtung der Halbkugel 13 ist bestimmt durch den Azimut $\delta_1$ und den Polarwinkel $\delta_2$ und den Rotationswinkel $\delta_3$. Jedes Hologramm 14 der Halbkugel enthält die Winkel $\delta_1$ und $\delta_2$ des Hologramms in Form eines rotationsinvarianten Codes und eine Winkelcodierscheibe um $\delta_3$ zu bestimmen. Wenn das Licht des Laser-Scanners die Halbkugel trifft, wird der Strahl durch das Hologramm 14 reflektiert. Nur wenn der reflektierte Strahl 0. Ordnung parallel zum ursprünglichen Licht ist, wie in der Figur abgebildet, wird der Strahl 1. Ordnung von den TV-Kameras 21 und 22 nach Durchgang durch den Strahlteiler 19 empfangen. Die Bilder werden mit den Monitoren 23 und 24 ausgewertet. Der Monitor 24 zeigt ein Segment des Ringcodes und ein Segment der Winkelcodierscheibe. $\delta_1$ und $\delta_2$ sind durch den Ringcode bestimmt. $\delta_3$ ist durch eine feste Markierung auf dem Monitor bestimmt, die eine Position auf der Winkelcodierscheibe auswählt, die einen bestimmten Winkel $\delta_3$ bestimmt. Der Monitor 23 zeigt eine Lichtintensitätsverteilung, wo der Schwerpunkt der Intensitätsverteilung ein Maß für den Abstand a zwischen dem Strahl 0. Ordnung und dem Strahl 1. Ordnung ist. Da der entsprechende Beugungswinkel $\chi$ als charakteristische Konstante des Hologramms bekannt ist, kann der Abstand r ausgerechnet werden. Bezogen auf das BKS-System ist die Richtung des Lichtstrahls des Laser-Scanners definiert durch die Winkel ($\theta$ und $\phi$, r, $\theta$, $\phi$ kann mit konventionellen Methoden transformiert werden in x, y, z. Mit x, y, z, $\delta_1$, $\delta_2$, $\delta_3$ können die Winkel $\alpha$, $\beta$, $\gamma$ bestimmt werden.

Die Auflösung der Raumkoordinaten sowie die Fehlertoleranzen hängen im wesentlichen von folgenden Parametern ab:

a) Winkelauflösung der x-Ablenkung des Scanners 18

b) Winkelauflösung der y-Ablenkung des Scanners 18

c) Diskretisierung der Winkelangaben in den Hologrammen

d) Beugungswinkel der Hollogramme

e) Pixelauflösung der lichtempfindlichen Empfänger 22 und 23

f) Rundungsfehler bei der Transformationsberechnung.

Die Auflösung der Rotationswinkel sowie die Fehlertoleranzen hängen im wesentlichen von folgenden Parametern ab, die teilweise nicht unabhängig voneinander sind:

a) Anzahl der Hologramme auf der Körperoberfläche

b) Größe und Hologramme

c) Krümmung der Körperoberfläche
Durch Varianten der Krümmung über die Körperoberfläche kann die Auflösung winkelabhängig gemacht werden. Bei einer abgeflachten Kugeloberfläche nimmt der Betrag der Krümmung im Randbereich zu und damit die Winkelauflösung ab, wohingegen im zentralen Bereich der Betrag der Krümmung ab-und damit die Winkelauflösung zunimmt. Bei einer Kugeloberfläche ist der Betrag der Krümmung konstant und damit auch die Winkelauflösung.

d) Auflösung der Raumkoordinaten (Fehlerfortpflanzung)

e) Diskretisierung der Winkelangaben in den Hologrammen

f) Rundungsfehler bei der Transformationsberechnung.

Bei einer Anwendung von Interpolationsverfahren kann mit kleiner werdendem Abstand die Auflösung der Rotationswinkel steigen.

Eine besonders bevorzugte Ausführungsform des Erfindungsgegenstandes für die Längenmessung besteht darin, daß ein Laser als Quelle kohärenten Lichts ein ein-, zwei-oder dreidimentsionales Fourier-holographisch hergestelltes Gitter betrahlt, das fest mit dem Gegenstand verbunden ist, und daß das an diesem Gitter gebeugte Licht mit einer Linse auf einer TV-Kamera als lichtempfindlichen Empfänger abgebildet wird. Bei Zugdeformationen wandern die Beugungspunkte 1. oder höherer Ordnung in Richtung des Beugungspunktes 0. Ordnung, bei Druckdeformationen in entgegengesetzter Richtung. Beim dreidimensionalen Gitter verändern sich die Gitterkonstanten des Beugungsbildes entsprechend. Je höher die Ordnung der Beugungspunkte ist, die für die Auswertung noch berücksichtigt werden, um so höher ist die Meßgenauigkeit. Zur besseren Orientierung in komplexen holographischen Bildern kann die 1. Ordnung des Beugungsbildes mit einer Markierung versehen werden, die als Rekonstruktion eines Hologramms erscheint. Ist der Gegenstand mit einer größeren Anzahl von holographischen Gittern bedeckt, so können auch inhomogene Deformationen bei verschiedenen Veränderungen in den Abbildungen der Gitter an der TV-Kamera festgestellt werden.

Eine weitere besonders bevorzugte Ausführungsform des Erfindungsgegenstandes für die Längenmessung besteht darin, daß ein Laser als Quelle kohärenten Lichts ein auf dem Gegenstand fest angebrachtes Hologramm bestrahlt, dessen Beugungsbild ein Quadrat oder Rechteck ist, und daß dieses Beugungsbild von einer TV-Kamera aufgenommen wird. Bei Zug-oder Druckdeformationen werden diese Figuren zu einer Ellipse bzw. einem Rechteck deformiert. Bei geringen Empfindlichkeitsanforderungen kann man mit solch einfachen Figuren eine schnelle und einfache Auswertung bezüglich der Längenveränderungen durchführen.

In einer anderen besonders bevorzugten Ausführungsform des Erfindungsgegenstandes bestrahlt die kohärente Lichtquelle 10 ein auf einem Gegenstand angebrachtes Hologramm 11, das aus vier Teilhologrammen besteht. Zum Beispiel sind 4·4 eines quadratischen Hologramms Teilhologramme für vier verschiedene Aufgaben:

1. Ein Hologramm, das eine Zahl oder einen Zahlencode als Bild liefert zur Identifizierung.

2. Ein Hologramm mit einer Positionsmarke.

3. Ein Hologramm, das das Strahlenbündel in einen Führungsstrahl fokussiert.

4. Ein zweidimensionales holographisch hergestelltes Gitter.

Das Licht wird so geführt, daß jeweils nur ein Teilhologramm bestrahlt und vom Empfänger ausgewertet wird. Damit kann der Gegenstand identifiziert und positioniert werden und seine Längenänderungen am Ort der mit dem Hologramm versehenen Oberfläche können ermittelt werden.

## Ansprüche

1. Berührungsloses optisches Verfahren zur Feststellung und·oder Messung von Bestimmungsgrößen eines Gegenstandes, z.B. nach Art, Lage, Längenänderung, Schwingungsspektrum, **dadurch gekennzeichnet,** daß mindestens ein optisches Medium, das fest mit dem Gegenstand verbunden ist, das Licht einer kohärenten Lichtquelle ändert, wobei das veränderte Licht von einem lichtempfindlichen Empfänger mit Auswertung empfangen wird und die Bestimmungsgröße mit Hilfe der Auswertung bestimmbar ist.

2. Verfahren nach Anspruch 1, dadurch gekennzeichnet, daß das optische Medium ein akusto-optischer Wandler ist und das Licht moduliert wird.

3. Verfahren nach den Ansprüchen 1 und 2, dadurch gekennzeichnet, daß der lichtempfindliche Empfänger mit Auswertung aus einem passiven optischen Medium als Filter und einem lichtempfindlichen Empfänger mit nachgeschalteter Auswertung besteht.

4. Verfahren nach den Ansprüchen 1 bis 3, dadurch gekennzeichnet, daß das passive optische Medium ein Transmissions-Hologramm ist.

5. Verfahren nach den Ansprüchen 1 bis 4, dadurch gekennzeichnet, daß das Transmissions-Hologramm ein Fourier-Transmissions-Hologramm ist.

6. Verfahren nach Anspruch 1, dadurch gekennzeichnet, daß das optische Medium ein Hologramm ist, das das Licht reflektiert und beugt.

7. Verfahren nach den Ansprüchen 1 und 4 bis 6, dadurch gekennzeichnet, daß das Hologramm ein Multiflex-Hologramm ist.

8. Verfahren nach den Ansprüchen 6 oder 6 und 7, dadurch gekennzeichnet, daß das Hologramm ein Fourier-Hologramm ist.

9. Verfahren nach den Ansprüchen 6 bis 8, dadurch gekennzeichnet, daß die Struktur des Hologramms rechnerisch bestimmt und das Hologramm synthetisch hergestellt wird.

10. Verfahren nach den Ansprüchen 6 bis 9, dadurch gekennzeichnet, daß das Hologramm mit einem ölabweisenden Lack überzogen ist.

11. Verfahren nach den Ansprüchen 6 bis 10, dadurch gekennzeichnet, daß das Hologramm direkt auf den Gegenstand eingeprägt ist.

12. Verfahren nach den Ansprüchen 6 bis 11, dadurch gekennzeichnet, daß das Hologramm einen Code zur Identifizierung des Gegenstandes enthält.

13. Verfahren nach den Ansprüchen 6 bis 12, dadurch gekennzeichnet, daß das Hologramm ein ein-, zwei-oder dreidimensionales holographisch hergestelltes Gitter ist.

14. Verfahren nach den Ansprüchen 6 bis 12, dadurch gekennzeichnet, daß die Rekonstruktion des Hologramms Positionsmarken enthält, die die Orientierung bezüglich eines Zielpunktes kennzeichnen.

15. Verfahren nach den Ansprüchen 6 bis 11, dadurch gekennzeichnet, daß das Hologramm das kohärente Licht in einen Führungsstrahl umwandelt.

16. Verfahren nach den Ansprüchen 6 bis 12, dadurch gekennzeichnet, daß das Hologramm die Winkelkoordinaten (Höhe, Breite) eines mit dem Gegenstand fest verbunden gedachten Koordinatensystems in Form eines rotationsinvarianten Codes enthält.

17. Verfahren nach den Ansprüchen 8 bis 16, dadurch gekennzeichnet, daß das Hologramm das Bild einer Winkelcodierscheibe enthält.

18. Verfahren nach den Ansprüchen 12 bis 17. dadurch gekennzeichnet, daß das Hologramm mehrere Teil-Hologramme, z.B. entsprechend den Ansprüchen 12 bis 17, zur Ermittlung verschiedener Bestimmungsgrößen enthält.

19. Verfahren nach den Ansprüchen 12 bis 18, dadurch gekennzeichnet, daß die Hologramme wabenförmig sind.

20. Verfahren nach Anspruch 19, dadurch gekennzeichnet, daß die Hologramme die Körperoberfläche des Gegenstandes möglichst vollständig bedecken.

21. Verfahren nach den Ansprüchen 16 bis 20, dadurch gekennzeichnet, daß der Gegenstand gekrümmte Oberflächen besitzt.

22. Verfahren nach Anspruch 21, dadurch gekennzeichnet, daß der Gegenstand kugelige Oberflächen besitzt.

23. Vorrichtung zur Durchführung des Verfahrens nach den Ansprüchen 1 bis 21, dadurch gekennzeichnet, daß die Quelle des kohärenten Lichts ein Laser oder eine Laser-Diode ist.

24. Vorrichtung zur Durchführung des Verfahrens nach den Ansprüchen 1 bis 21, dadurch gekennzeichnet, daß der lichtempfindliche Empfänger eine TV-Kamera ist.

25. Vorrichtung nach den Ansprüchen 23 und 24, dadurch gekennzeichnet, daß der Laser mit einer Laser-Scanner-Einrichtung zusammengefaßt ist.

26. Vorrichtung nach Anspruch 25, dadurch gekennzeichnet, daß die Winkelkoordinaten der Laser-Scanner-Einrichtung bezügliche eines festen Koordinatensystems bestimmbar sind.

# FIG.1

FIG. 2

# FIG.3

FIG.4